# EUROPÄISCHE PATENTSCHRIFT

(11) **EP 1 340 974 B1**
(45) Veröffentlichungstag und Bekanntmachung des Hinweises auf die Patenterteilung: **17.09.2008**
(21) Anmeldenummer: 03004003.4
(22) Anmeldetag: 24.02.2003
(51) Int. Cl.: G01N 21/88, G01N 21/84, G01N 21/956, G01B 11/30, B05C 11/00, B05C 5/00

(54) **Verfahren zur Qualitätssicherung des Auftrags eines Mediums auf ein Objekt**
Quality assurance method for the application of a medium on an object
Procédé de contrôle de qualité de l'application d'un milieu sur un objet

(30) Priorität: 01.03.2002 DE 10208863; 11.09.2002 DE 10242133
(43) Veröffentlichungstag der Anmeldung: 03.09.2003
(73) Patentinhaber: VMT Bildverarbeitungssysteme GmbH, 69469 Weinheim (DE)
(72) Erfinder: Grünewald, Frank Dr.-Ing., 69488 Birkenau (DE); Mikeska, Harald, Manfred, Günter, 68219 Mannheim (DE)
(74) Vertreter: Mierswa, Klaus

(56) Entgegenhaltungen:
- US-A- 5 711 989
- PATENT ABSTRACTS OF JAPAN vol. 016, no. 142 (E-1187), 9. April 1992 (1992-04-09) & JP 04 002194 A (SANYO ELECTRIC CO LTD), 7. Januar 1992 (1992-01-07)
- PATENT ABSTRACTS OF JAPAN vol. 1996, no. 10, 31. Oktober 1996 (1996-10-31) & JP 08 148817 A (SANYO ELECTRIC CO LTD), 7. Juni 1996 (1996-06-07)
- PATENT ABSTRACTS OF JAPAN vol. 1998, no. 05, 30. April 1998 (1998-04-30) & JP 10 010051 A (FANUC LTD), 16. Januar 1998 (1998-01-16)
- PATENT ABSTRACTS OF JAPAN vol. 1995, no. 04, 31. Mai 1995 (1995-05-31) & JP 07 005118 A (MAZDA MOTOR CORP), 10. Januar 1995 (1995-01-10)

## Beschreibung

### Technisches Gebiet:

Die Erfindung betrifft ein Verfahren zur Qualitätssicherung eines als Zielauftrag auf ein Zielobjekt aufzubringenden Auftrags eines Mediums, wie Klebe-, Sprüh-, Schweiß- oder Spritzauftrag, unter Verwendung eines Manipulators zum Aufbringen des Auftrags sowie unter Verwendung einer externen Prüfstation.

### Stand der Technik:

Bei automatischen Klebe- und Sealingauftragssystemen von Klebstoffsträngen bzw. Klebstoffen als Klebenähte sowie bei Lackauftragssystemen zur Auftragung von Lacken durch Düsen besteht die Notwendigkeit, die Erscheinungszustände der auf einer bestimmten Fläche aufgebrachten Klebe- und Sealingnähte wie auch des Sprühstrahls beziehungsweise dessen Abbildung zu überwachen.

Derartige Auftragssysteme, welche von unterschiedlichen Herstellern und Lieferanten geliefert werden, sind unterschiedlich aufgebaut und bestehen aus unterschiedlichen Funktionsgruppen und Komponenten, wie:
1. Materialversorgung, automatische Pumpen: sie fördern das aufzutragende Material aus Behältern in die Zuleitungen zu den applikationsspezifischen Einheiten wie z.B. Temperierer, Filtersystem und weitere mehr.
2. Nachgeschaltete Dosiersysteme: sie sorgen für eine entsprechende Dosierung und Überwachung des Volumenflusses des jeweiligen Materials.
3. Zuleitungen: in den Zuleitungen wird das dosierte und gegebenenfalls temperierte Material zum Austritt, beispielsweise Düsen, transportiert.
4. Düsensysteme: sie bringen durch ihre konstruktive Auslegung das Material beim Auftrag in eine bestimmte Form und Orientierung, zum Beispiel als Dreieck, Rechteck, als Halbrund oder als Swirl, oder in weiteren Formen. Die Düsen können rotierende Düsen sein.
5. Manipulator: das ist ein System, zum Beispiel ein Roboter oder ein CNC-Achssystem, welches die Düsen an diejenigen Positionen befördert, an welchen der Materialauftrag erfolgen soll. Durch eine entsprechende Auslegung der Manipulatoren, nämlich hinsichtlich der Geschwindigkeit der Aufbringung, der Richtung der Düse, des Abstandes der Düse zur Oberfläche usw., werden auch die Form und die Maße des Auftrags, wie Länge, Breite, Position und Dicke, mitbestimmt.
6. Material: das ist der Klebstoff mit dichtenden, verbindenden, farbgebenden und korrosionschützenden Eigenschaften bzw. mit einer Kombination derartiger Eigenschaften. Die Form des Auftrags wird auch von den Eigenschaften des Materials, z.B. seiner Viskosität, mitbestimmt

Für die Funktionalität der Klebung ist der ordnungsgemäße Klebe- oder Sprühauftrag des Klebstoffes Grundvoraussetzung. Der ordnungsgemäße Klebe- oder Sprühauftrag zeigt sich äußerlich dadurch, daß die Formung, Positionierung, Breite und Höhe sowie Unterbrechungsfreiheit und Homogenität der Auftrages mit einer reproduzierbaren gleichbleibenden Qualität erfolgt.

Als Stand der Technik ist die "direkte Prüfung" des Klebeauftrages am Objekt bekannt. Dazu gibt es Überwachungssysteme, die die Form und Position des Kleberauftrags mit einem Bildverarbeitungssystem, BVS, überprüfen. Dazu wird das Objekt, auf dem der Kleberauftrag aufgebracht ist, in eine Prüfstation, welche ein Bildverarbeitungssystem mit Kamera aufweist, verbracht, oder das Bildverarbeitungssystem an das Objekt transportiert. Dort wird der Kleberauftrag durch die Kamera erfaßt und die Qualität des Kleberauftrages automatisch inspiziert, um bei Auftreten eines Fehlers des Kleberauftrages eine Meldung an die Steuerung zu senden.

Eine weitere Möglichkeit besteht darin, die Funktionalität des Auftragssystems auch durch Onlinekontrolle der Einzelkomponenten, so durch Druckmessung, Temperaturmessung und Volumenüberwachung, automatisch zu überwachen. Ein teilweises Verstopfen der Düse oder Anhaftungen von getrockneten Rückständen des Klebers bzw. des Kleberauftrages, was zu erheblichen Veränderungen der Qualität führt, können auf diese Weise nur bedingt erkannt werden.

Die Vorgehensweise mittels Überwachungssystemen, welche die Form und Position des Kleberauftrages mit einem Bildverarbeitungssystem überprüfen, ist mit dem Nachteil behaftet, daß sie nur angewendet werden kann, wenn die Position des Kleberauftrages determiniert ist, wie es zum Beispiel bei Kleberaupen der Fall ist, jedoch z.B. nicht bei Materialien, die in Hohlräume gespritzt werden.

Somit kann diese Vorgehensweise nur angewendet werden, wenn das Objekt, auf welches der Kleberauftrag aufgebracht wird, so zugänglich ist, daß der zu kontrollierende Auftrag beleuchtbar und für die Kamera einsehbar ist, so daß sich die Konturen des Kleberauftrags korrekt und reproduzierbar abbilden. Bei stark dreidimensionalen Oberfläche und engen Platzverhältnissen ist das nicht möglich, z.B. im Innenraum oder im Motorbereich einer Rohkarosse eines Automobils. Des weiteren wird direkt die Taktzeit des Gesamtprozesses beeinflußt. Die Taktzeit verlängert sich, weil direkt nach der Aufbringung des Materials auf das-Objekt geprüft wird und alle Folgeschritte zwingend sofort danach erfolgen müssen. Des weiteren müssen die Kleberauftrags-Prüfsysteme individuell an jede auszurüstende Anlage angepaßt werden, was zeit- und kostenintensiv ist.

Aus der JP 04 002 194 A ist eine Beschichtungsvorrichtung mit einem CPUgesteuerten Rotationstisch bekannt. Zunächst wird Klebstoff mittels einer Spritzdüse auf eine Versuchsplatte aufgebracht. Der aufgebrachte Klebstoff wird von einer Kamera abgebildet, und aus der Abbildung wird die Fläche des Klebstoffs berechnet Das Ergebnis der Berechnung wird zu Kontrollzwecken mit mit vorgegebenen Daten verglichen.

Die US 5,711,989 offenbart ein Verfahren zur Verteilung einer viskosen Flüssigkeit, z.B. Klebstoff, auf der Oberfläche einer Platine. Die Flüssigkeit wird aus gegenüber der Oberfläche bewegten Düsen an verschiedenen Punkten auf die Oberfläche aufgespritzt.

Aus der JP 08 148 817 A ist ebenfalls eine Vorrichtung zur Beschichtung eines Objekts mit Klebstoff bekannt. Eine hiermit erzeugte Beschichtung wird mit einer CCD-Kamera erfasst; aus dem von dieser gelieferten. Bild wird der Durchmesser des Klebstoffauftrags bestimmt und das Ergebnis mit einem vorgegebenen Wert verglichen. Wenn hierbei eine unzulässig große Abweichung ergibt, wird eine entsprechende Anpassung des Durchmessers des Klebstoffauftrags vorgenommen.

Aus der JP 10 010 051 A geht eine Methode zur Überwachung eines Klebstoffauftrags hervor, deren Ergebnisse nur wenig von der Beleuchtungsgeometrie abhängen. Dies wird dadurch erreicht, dass der Klebstoffauftrag nacheinander von drei verschiedenen Lichtquellen beleuchtet wird und hiervon jeweils ein Bild aufgenommen wird; diese Bilder werden mit Bildern verglichen, welche vor dem Klebstoffauftrag aufgenommen wurden.

Die JP 07 005 118 A betrifft einen Detektor zur Erfassung der Höhe eines Klebstoffauftrags auf einem Objekt. Vor und nach dem Auftrag wird jeweils ein Bild des Objekts aufgenommen. Der Bildhintergrund wird eliminiert. Derjenige Bereich des Bildes, dessen Helligkeit sich durch den Klebstoffauftrag geändert hat, wird mit einem gespeicherten Referenzbereich verglichen.

### Technische Aufgabe:

Der Erfindung liegt die Aufgabe zu Grunde, ein Verfahren zu schaffen, mittels desselben eine Möglichkeit zur Qualitätskontrolle bzw. Überwachung für den Auftrag eines Mediums, z.B. Kleber, oder eines gespritzten oder gesprühten Farbauftrags auch dann gegeben sein soll, wenn der Auftrag des Mediums bzw. der Farbe nicht direkt inspiziert werden kann, wobei ausgeschlossen bzw. nahezu ausgeschlossen sein soll, dass ein Fehler des Auftragssystems unbemerkt bleibt.

### Offenbarung der Erfindung sowie deren Vorteile:

Diese Aufgabe wird erfindungsgemäß gelöst durch ein Verfahren zur Qualitätssicherung eines als Zielauftrag auf ein Zielobjekt aufzubringenden Auftrags eines Mediums, wie Klebe-, Sprüh-, Schweiß- oder Spritzauftrag, unter Verwendung eines Manipulators zum Aufbringen des Auftrags sowie einer externen Prüfstation, welche ein Qualitätssicherungssystem mit mindestens einem daran angeschlossenen Sensor, wie Bildverarbeitungssystem mit mindestens einer daran angeschlossenen Kamera, sowie ein im Erfassungsbereich desselben angeordnetes, von dem Zielobjekt beabstandetes beschichtbares, wie beklebbar, besprühbar oder bespritzbar, Testobjekt umfaßt, mit folgenden Schritten:
a) die wesentlichen geforderten Solleigenschaften, nämlich die räumliche Form- und/oder die Farbgebung des beabsichtigten, nachfolgend auf das Zielobjekt aufzubringenden Zielauftrags werden als vorgegebene Soll-Daten in dem Qualitätssicherungssystem gespeichert,
b) der Manipulator wird so gesteuert, daß er vor Aufbringen des Zielauftrags auf das Zielobjekt zunächst auf das Testobjekt einen Testauftrag, wie in Form eines Klebe- oder Sprüh- oder Spritzauftrags, aufbringt,
c) nach Aufbringen des Testauftrags auf das Testobjekt wird das Qualitätssicherungssystem dazu veranlaßt, ein Abbild des Testauftrags zu erfassen und dieses entweder in Form von Ist-Daten zu speichern oder aus diesem die wesentlichen Ist-Eigenschaften des Testauftrags, nämlich dessen Form- und / oder Farbgebung, abzuleiten und in Form von Ist-Daten zu speichern, und die Ist-Daten zum Zweck der Kontrolle des Testauftrags mit den Soll-Daten zu vergleichen,
d) das Ergebnis des Vergleichs wird zurückgemeldet, wobei bei Erkennen einer eine bestimmte Toleranzschwelle überschreitenden Abweichung der Ist-Daten von den Soll-Daten ein Schaltsignal ausgelöst und/oder die Aufbringung des Zielauftrages auf das Zielobjekt verhindert oder angehalten wird, und
e) der Manipulator wird bei Ausbleiben des Schaltsignals zum Aufbringen des Zielauftrages auf das Zielobjekt so gesteuert, daß Zielauftrag und Testauftrag in ihren wesentlichen Eigenschaften, wie Form- und/ oder Farbgebung und/oder Konsistenz, im Wesentlichen übereinstimmen,
wobei
- entweder ein die wesentlichen Soll-Eigenschaften aufweisender Referenz-Auftrag des Klebers oder Mediums auf eine von dem Testobjekt beabstandete Referenzfläche aufgebracht, mittels des Sensors des Qualitätssicherungssystems, wie Kamera des Bildverarbeitungssystems, ein Abbild des Referenz-Auftrages erfaßt und dieses in Form von digitalen Daten in das Qualitätssicherungssystem eingelesen wird, und diese digitalen Daten als Soll-Daten herangezogen werden,
- oder mittels Software, insbesondere Grafikprogramm, eine graphische Simulation einer Abbildung eines die wesentlichen Solleigenschaften aufweisenden Auftrags des Mediums, zum Beispiel Kleber, auf eine Fläche erstellt wird, und die der Simulation der Abbildung zu Grunde liegenden Daten als Soll-Daten verwendet werden.

Dies bedeutet, daß der Manipulator zum Aufbringen eines Testauftrages in der gleichen Weise gesteuert wird wie beim späteren Aufbringen des Zielauftrags, mit dem einzigen Unterschied, daß das Medium beim Testauftrag auf das Testobjekt und anschließend beim Zielauftrag auf das Zielobjekt aufgebracht wird. Daher können erfindungsgemäß die wesentlichen Eigenschaften des Testauftrages als stellvertretend für diejenigen des Zielauftrages geprüft, d.h. mit den vorgegebenen Soll-Eigenschaften verglichen werden. Erfindungsgemäß wird also der Testauftrag anstelle des Zielauftrages inspiziert, was in der Praxis mit erheblichen Vorteilen verbunden ist, welche unten noch erläutert werden, weil unter Umständen der Zielauftrag nicht inspiziert werden kann. Falls der Vergleich ergibt, daß der Testauftrag in zufriedenstellender Weise die Soll-Eigenschaften besitzt, kann davon ausgegangen werden, daß auch der anschließende Zielauftrag diese vorgegebenen Eigenschaften aufweist; auf eine direkte Kontrolle des Zielauftrages kann daher vorteilhafterweise verzichtet werden. Dabei kann der Schritt a) vor oder nach dem Schritt b) oder nach dem Schritt c) oder nach dem Schritt d) ausgeführt werden. Das Schaltsignal ist vorzugsweise ein optisches oder akustisches Warnsignal.

Gemäß einer Variante der Erfindung wird ein die wesentlichen Soll-Eigenschaften aufweisender Referenz-Auftrag des Klebers oder Mediums auf eine von dem Testobjekt beabstandete Referenzfläche aufgebracht, mittels des Sensors des Qualitätssicherungssystems, wie Kamera des Bildverarbeitungssystems, wird ein Abbild desselben erfaßt und dieses in Form von digitalen Daten in das Qualitätssicherungssystem eingelesen, wobei diese digitalen Daten als Soll-Daten herangezogen werden.

Mittels manueller Dateneingabe und/oder mittels Software, insbesondere Grafikprogramm, kann eine graphische Simulation einer Abbildung eines die wesentlichen Soll-Eigenschaften aufweisenden Auftrages Mediums, zum Beispiel Kleber, auf eine Fläche erstellt werden, wobei die der Simulation der Abbildung zu Grunde liegenden Daten als Soll-Daten verwendet werden.

Gemäß einer anderen Variante der Erfindung werden die wesentlichen Solleigenschaften mittels Dateneingabe, welche insbesondere eine manuelle Dateneingabe z.B. über eine Tastatur oder eine Maus sein kann, in das Qualitätssicherungssystem eingegeben und als Soll-Daten verwendet.

Hierbei können z.B. die geforderte Formgebung, nämlich die geforderte Länge, Breite, Höhe, Dicke, Krümmung und Torsion, sowie die geforderte Farbgebung des Zielauftrags in dem Qualitätssicherungssystem gespeichert und als Soll-Daten verwendet werden. Als Testobjekt kann insbesondere eine Platte, z.B. eine Aluminiumplatte, verwendet werden. Der Vergleich zwischen den Soll-Daten und den Ist-Daten kann zum Beispiel mittels Bildverarbeitung eines Bildverarbeitungssystems durchgeführt werden.

Die wesentlichen Solleigenschaften können durch die geforderte Formgebung, nämlich geforderte Länge, Breite, Höhe, Dicke, Krümmung und Torsion, sowie durch die geforderte Farbgebung des Zielauftrags bestimmt sein.

Gemäß einer Variante der Erfindung wird nach Ende des Schrittes d) das beklebte, besprühte oder bespritzte Testobjekt weggefahren und aus einem Magazin von Objekten ein neues Objekt entnommen und im Erfassungsbereich des Sensors des Qualitätssicherungssystems, wie Kamera des Bildverarbeitungssystems, sowie innerhalb der Reichweite des Manipulators angeordnet, und die Schritte b) bis d) unter Verwendung des neuen Objekts als Testobjekt erneut ausgeführt.

In einer Variante der Erfindung wird das Testobjekt beliebig im Erfassungsbereich des Sensors des Qualitätssicherungssystems, wie Kamera des Bildverarbeitungssystems, sowie innerhalb der Reichweite des Manipulators angeordnet. Das Qualitätssicherungssystem kann zu diesem Zweck so eingerichtet sein, daß es die wesentlichen Eigenschaften des Testauftrags unter jeder Orientierung zu erkennen imstande ist.

Die Schritte b) bis d) können nach Beendigung jedes Zielauftrags erneut durchgeführt werden. Gemäß einer anderen Variante werden die Schritte b) bis d) dann erneut durchgeführt, wenn eine vorgegebene Anzahl von Zielaufträgen erfolgt ist.

Bevorzugt sind das Testobjekt und das Zielobjekt hinsichtlich ihrer Form, ihres Materials und ihrer Oberflächenbeschaffenheit gleichartig, so daß der Testauftrag und der Zielauftrag unter möglichst gleichen Bedingungen erfolgen und die Eigenschaften des Zielauftrages möglichst vollständig durch die Eigenschaften des Testauftrags repräsentiert werden. Bevorzugt sind das Testobjekt und das Zielobjekt Gegenstände gleicher Bauart. Beispielsweise können das Testobjekt und das Zielobjekt baugleiche rechte Vordertüren eines bestimmten Kfz-Typs sein.

Bevorzugt werden die Relativorientierung bzw. die Relativposition des Testobjekts gegenüber dem Manipulator während des Aufbringens des Testauftrags mit der Relativorientierung bzw. der Relativposition des Zielobjekts gegenüber dem Manipulator während des Aufbringens des Zielauftrags identisch gewählt.

In einer Variante der Erfindung werden folgende Schritte zusätzlich ausgeführt:
f) vor Beginn des Schrittes b) wird eine Folie als Testobjekt auf eine Trägerfläche aufgebracht,
g) die Folie wird nach Ende des Schrittes d) von der Trägerfläche entfernt, und zwar vorzugsweise automatisch
h) mindestens ein Zielauftrag wird aufgebracht,
i) eine neue Folie wird als Testobjekt auf die Trägerfläche aufgebracht, und zwar vorzugsweise automatisch
j) die Schritte b) bis d) werden erneut, vorzugsweise automatisch, ausgeführt.

Insbesondere können die Schritte g) bis j) mehrmals zyklisch nacheinander ausgeführt werden. Vorteilhaft hierbei sind die leichte und schnelle Auswechselbarkeit der als Testobjekt dienenden Folie sowie deren geringer Preis.

Gemäß einer weiteren Variante des Verfahrens wird der Testauftrag auf eine Folie, insbesondere Kunststoffolie, aufgebracht, die ihrerseits an einer Trägerfläche angeordnet ist, wobei die Folie vor Aufbringen des Testauftrags von einer Abwickelrolle abgerollt und nach Aufbringen des Testauftrags und erfolgter Prüfung desselben auf eine Aufwickelrolle aufgerollt wird, wobei diese Vorgänge vorzugsweise automatisch durch einen Roboter erfolgen.

Gemäß einer weiteren Variante der Erfindung ist der Sensor des Qualitätssicherungssystems positionierbar, wobei bei der Verwendung eines Bildverarbeitungssystems als Qualitätssicherungssystem die wenigstens eine verwendete Kamera eine Schwenkneigekopfkamera ist, welche einen schwenkbaren, frei positionierbaren Sensorkopf aufweist, dessen Position parametrierbar ist.

Ein Vorteil des erfindungsgemäßen Verfahrens besteht darin, daß die Qualitätssicherung parallel zu einem Serienfertigungsprozeß erfolgen kann, so daß im allgemeinen kein oder fast kein Taktzeitverlust der Serienfertigung eintritt. Es erfolgt eine Kontrolle des Testbildes, wie Spritz- oder Sealingbild, welche Kontrolle fortlaufend sein kann, bevor der Zielauftrag, der Auftrag auf das Zielobjekt, erfolgt ist.

Des Weiteren kann das Verfahren eingesetzt werden, wenn eine direkte Prüfung des Zielauftrags auf dem Zielobjekt nicht oder nur mit großem Zusatzaufwand möglich ist. Dies ist insbesondere dann besonders vorteilhaft, wenn in einer Serienfertigung große Stückzahlen von baugleichen Zielobjektes mit einem Zielauftrag versehen werden müssen. Ein systematisch fehlerhafter Zielauftrag kann hierbei lange unbemerkt bleiben und daher zur Unbrauchbarkeit einer großen Zahl von Zielobjekten führen.

Der letztgenannte Vorteil ist in vielen Fällen auch deshalb von erheblicher Bedeutung, weil die genauen Längen und Breiten z.B. von Klebstoff-Aufträgen ohnehin nur selten direkt am Zielobjekt überprüft werden; zu diesem Zweck müßte eigens ein Zielobjekt aus dem Fertigungsablauf entnommen werden, was oft mit einer Reihe von Nachteilen behaftet ist, beispielsweise mit einer Lücke im Fertigungstakt. Es ist durch das erfindungsgemäße Verfahren mit sehr geringem Aufwand möglich, ein universelles Prüf- oder Qualitätssicherungssystem zu schaffen, welches unabhängig von den übrigen Komponenten einer Fertigungsanlage und automatisch in einen automatischen Fertigungs- oder Produktionsablauf integriert werden kann. Das erfindungsgemäße Verfahren kann vollautomatisch parallel zum Automatikablauf der Fertigung ablaufen, ohne diesen zu stören. Es müssen lediglich der Platz für das Prüfsystem, bestehend aus Testobjekt und Qualitätssicherungssystem, wie Bildverarbeitungssystem mit wenigstens einer Kamera, zur Verfügung stehen und die Steuerung des Manipulators angepaßt werden.

Auch können die zur Durchführung des erfindungsgemäßen Verfahrens erforderlichen Komponenten in einfacher Weise an Fertigungssysteme, z.B. Klebeauftragssysteme, die bereits in Betrieb genommen wurden, nachgerüstet werden. Das erfindungsgemäße Verfahren kann somit mit geringem Nachrüstaufwand auch in bereits bestehenden Anlagen eingesetzt und durchgeführt werden.

Als fehlerhaft erkannte Aufträge von Testaufträgen können in Form von Daten oder als dazugehörige Fehlerbilder dokumentiert und gespeichert werden, wodurch eine Protokollierung oder Dokumentation des Prozesses möglich ist. Auf diese Weise ist es möglich, gezielt die Qualitätssicherung über längerer Zeiträume zu dokumentieren und stabil zu halten bzw. Optimierungen besser durchführen zu können und den Ausschuß der Produktion zu senken. Durch regelmäßige Qualitätssicherung ist es des Weiteren möglich, den Fertigungs- bzw. Herstellungsprozeß mit verringerten Materialmengen zu fahren, was zu Einsparungen beim Auftrag sowie bei der Entsorgung führt und somit auch dem Umweltaspekt gerecht wird.

Das erfindungsgemäße Verfahren stellt eine "indirekte Prüfung" eines Auftrags, der Zielauftrag, wie Klebe-, Sprüh- oder Spritzauftrags, dar. Das Verfahren kann zum Beispiel zum Aufbringen eines Auftrags in Klebe- Sprüh- oder Lackierzellen, welche während der Arbeits- und Manipulationsvorgänge nicht zugänglich sind, durchgeführt werden. Dazu wird eine externe Prüfstation, mindestens bestehend aus Testobjekt, zum Beispiel eine Aluminiumplatte, mit oder ohne Verfahrmechanismus, und bestehend aus Qualitätssicherungssystem mit Sensor, wie Bildverarbeitungssystem mit Kamera, verwendet, welche vorteilhafterweise nicht innerhalb des unzugänglichen oder zeitweise unzugänglichen Bereiches angeordnet zu werden braucht.

Die Prüfstation kann nämlich an nahezu jedem beliebigen Ort in Reichweite des Manipulators aufgestellt werden. Nach Aufbringen eines oder mehrerer Zielaufträge kann in zyklischem Ablauf immer wieder ein neues Testobjekt verwendet werden. der Manipulator kann den Testauftrag zu nahezu jedem beliebigen bzw. günstigen Zeitpunkt auf das Testobjekt aufbringen.

Der Testauftrag ist in seiner Form und seinen Positionen auf dem Testobjekt so ausgelegt, daß die wesentlichen Eigenschaften des Auftrags, der auf das Zielobjekt aufgebracht wird, im Testauftrag repräsentiert werden, z.B. Form und Farbgebung des Auftrags. Je nach Anforderung kann es sich bei dem Testauftrag um ein sehr einfaches Muster, zum Beispiel um einen Streifen konstanter Breite oder um einen sich verjüngenden oder verdickenden Streifen, bis hin zu einem sehr komplexen Muster, z.B. konzentrische Kreise mit Überkreuzungen oder beliebige Bahnen, handeln.

Nach Aufbringen des Testauftrags sendet der Manipulator eine Information zum Start der Prüfung an das Qualitätssicherungssystem. Diese Information kann ein Signal zum Start der Prüfung sein und bei mehreren möglichen Mustern Angaben zum Typ des Musters umfassen. Das Qualitätssicherungssystem kann das Muster des Testauftrags z.B. mit Methode der Bildverarbeitung überprüfen bzw. mit den Soll-Daten vergleichen und meldet das Ergebnis zurück.

Ein Fehler im Testauftrag ist mit großer Wahrscheinlichkeit auf einen Fehler im Auftragssystem zurückzuführen. In einer Fertigungsstraße kann bei Erkennung eines derartigen Fehlers der Automatikablauf unterbrochen und automatisch ein Signal ausgelöst werden, welches das Bedienpersonal der Fertigungsstraße oder z.B. einer Roboterstraße auf eine Störung aufmerksam macht, so daß diese lokalisiert und behoben werden kann. Auf Grund des ständig ansteigenden Automatisierungsgrades und des damit verbundenen wachsenden Anteils von automatischen Systemen sowie der entsprechenden Reduzierung des Personals ist eine ständige Kontrolle durch Menschen praktisch kaum durchführbar. Durch den Einsatz des erfindungsgemäßen Verfahrens können Folgefehler vermieden werden; der maximale Ausschuß der Fertigung kann auf ein Werkstück begrenzt werden.

Das Testobjekt kann nach jedem Testauftrag automatisch ausgewechselt werden. Ein besprühtes, beklebtes oder bespritztes Testobjekt kann gereinigt und wiederverwendet werden. Alternativ kann der Testauftrag auf eine Folie, insbesondere Kunststoffolie, aufgebracht werden, die ihrerseits an einer Trägerfläche angeordnet ist. Die Folie kann ähnlich einem Tonband vor dem Testauftrag von einer Abwickelrolle abgerollt und nach dem Testauftrag und erfolgter Prüfung desselben auf eine Aufwickelrolle aufgerollt werden. Dieser Vorgang kann automatisiert werden, zum Beispiel durch einen Roboter. Beim Aufwickeln kann das Medium größtenteils von einem Abstreifer von der Folie abgestreift und in einem Entsorgungsbehälter aufgefangen werden.

Der Sensor des Qualitätssicherungssystems kann positionierbar sein, wobei bei der Verwendung eines Bildverarbeitungssystems als Qualitätssicherungssystem die wenigstens eine verwendete Kamera eine Schwenkneigekopfkamera ist. Diese weist einen schwenkbaren, frei positionierbaren Sensorkopf auf, dessen Position parametrierbar und in Abhängigkeit vom Objekttyp während des Einrichtens im Einrichtbetrieb optimal einstellbar ist. Insbesondere kann die Schwenkneigekopfkamera eine Zoomoptik aufweisen, welche ebenfalls parametrierbar ist.

### Kurzbezeichnung der Zeichnung, in der zeigen:

Figur 1 einen Sealer-Auftrag auf ein Testobjekt
Figur 2 einen NVH-Auftrag auf ein Testobjekt
Figur 3 eine schematische Anordnung eines Qualitätssicherungssystems mit Sensor, Manipulator, einer Testfläche sowie eines darauf aufgebrachten Testauftrags und
Figuren 4 und 5 zwei Testobjekte mit schematisch dargestellten unterschiedlichen Testaufträgen.

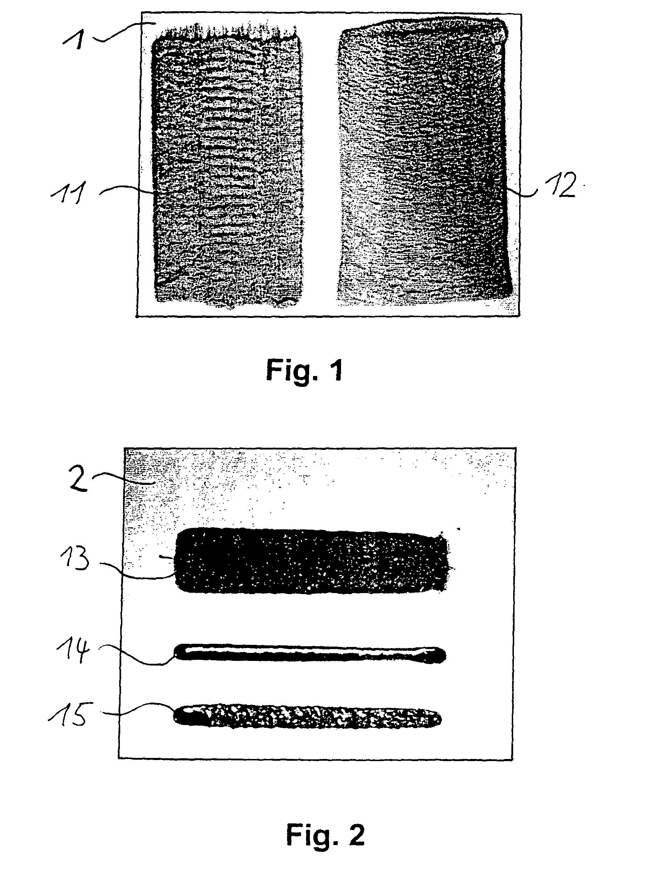

Die Testobjekte der Figuren 1 und 2 sind jeweils als ebene Testflächen ausgebildet, wobei die Aufträge Beispiele für Klebeaufträge darstellen.

Fig. 1 zeigt einen Sealer-Auftrag 3,4, welcher aus einem ersten Teil 3 und einem zweiten Teil 4 besteht, welche durch einen nicht gezeigten Manipulator als Testauftrag 3,4 auf eine gemeinsame Testfläche 1 aufgebracht wurden. Fig. 2 zeigt einen NVH-Auftrag 5,6,7, welcher aus drei Teilen 5,6 und 7 besteht, welche durch den als Testauftrag 5,6,7 auf eine gemeinsame Testfläche 2 aufgebracht wurden.

Der Testauftrag dient zur Qualitätssicherung des Spritz- oder Sealingbildes eines nach dem Testauftrag durchzuführenden Zielauftrages auf ein nicht gezeigtes Zielobjekt. Test- und Zielauftrag werden vorzugsweise unter identischen Bedingungen auf die Testfläche bzw. das Zielobjekt aufgetragen. Testfläche und Zielobjekt sind vorzugsweise ferner baugleiche Gegenstände. In beiden Auftragungsvorgängen, Testauftrag und Zielauftrag, wird der Manipulator in der gleichen Weise gesteuert, mit dem einzigen Unterschied, daß das Medium für den Testauftrag auf die Testfläche 1 bzw. 2 und für den Zielauftrag, anstatt erneut auf die Testfläche aufgebracht zu werden, nun auf das Zielobjekt aufgebracht wird. Mittels eines Qualitätssicherungssystems mit Sensor, wie Bildverarbeitungssystem mit einer daran angeschlossenen Kamera, welche in den Figuren nicht gezeigt sind, wird nach Fertigstellung des Testauftrags ein Abbild desselben erfaßt, digitalisiert, in das Qualitätssicherungssystem eingelesen und dort als Ist-Bild gespeichert.

Gemäß einer Variante des Verfahrens wird der Vergleich zwischen den Soll-Daten und den Ist-Daten mittels eines Mustervergleichs, wie Templatematching, innerhalb des Qualitätssicherungssystems, wie mittels Bildverarbeitung durch das Bildverarbeitungssystem, durchgeführt.

Im Qualitätssicherungssystem, auch bezeichnet als Qualitätsüberwachungssystem, ist ferner ein Sollbild hinterlegt. Das Sollbild ist die digitalisierte Abbildung eines Referenz-Auftrags, welcher auf eine Referenzfläche aufgetragen wurde und die wesentlichen geforderten Solleigenschaften hinsichtlich der räumlichen Formgebung und der Farbgebung des beabsichtigten, nämlich des nachfolgend noch auf das Zielobjekt aufzubringenden Zielauftrags besitzt. Das Sollbild dient als Referenz. d.h. als Vergleichsgrundlage für das Ist-Bild. Diese beiden Bilder, Sollbild und Ist-Bild werden innerhalb des Qualitätssicherungssystems mittels bekannter Verfahren des Mustervergleichs, wie Templatemaching, zum Beispiel mittels Bildverarbeitungs-Software, miteinander verglichen.

Das Ergebnis des Vergleichs wird zurückgemeldet. Überschreitet die Abweichung zwischen Sollbild und Ist-Bild eine bestimmte vorgegeben Toleranzschwelle, wird dies als Erkennung eines fehlerhaften Testauftrags interpretiert. Es wird ein Schaltoder Warnsignal ausgelöst und die Aufbringung des Zielauftrages auf das Zielobjekt verhindert, da bei fehlerhaftem Testauftrag anzunehmen ist, daß auch die Zielaufträge fehlerhaft sein würden. Ein Unbrauchbarwerden des Zielobjekts durch einen fehlerhaften Zielauftrag wird also erfindungsgemäß schon vorher verhindert.

Ferner kann das Ergebnis des Vergleichs z.B. zum Zweck der Diagnose von Fehlerursachen auch quantitativ zurückgemeldet werden. Die Abweichung zwischen Soll-Bild und Ist-Bild kann bei jedem Vergleich in eine Kennzahl oder einen Satz von solchen umgesetzt werden; diese können fortlaufend protokolliert bzw. aufgezeichnet werden. Auf diese Weise läßt sich später das zeitliche Verhalten der Abweichung rekonstruieren, was wertvolle Aufschlüsse über die Ursachen der Abweichung und über die sie beeinflussenden Parameter, wie z.B. Temperatur, Luftfeuchte, Alterung des Mediums und andere Betriebs- oder Umgebungsbedingungen, liefern kann. Hierdurch wird auch die vorteilhafte Möglichkeit geschaffen, eine schleichende Entstehung eines Fehlereinflusses frühzeitig zu Erkennung und dessen Ursache zu beseitigen oder Gegenmaßnahmen einzuleiten, noch bevor es zur Auslösung des Warnsignals bzw. zu einer Unterbrechung des Fertigungsablaufes kommt. Falls die Toleranzschwelle nicht überschritten wird, wird dies als Erkennung eines einwandfreien Testauftrages interpretiert. Der Prozeß wird in diesem Fall fortgesetzt, d.h. der Zielauftrag auf das Zielobjekt aufgebracht. Das gesamte erfindungsgemäße Verfahren kann vorteilhaft vollautomatisch ablaufen.

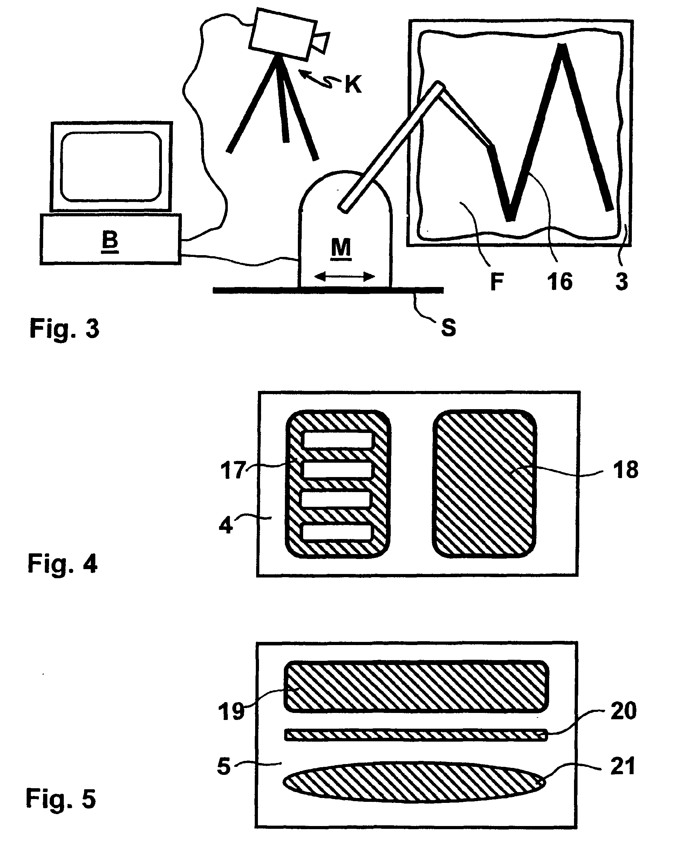

Die Figur 3 zeigt eine schematische Anordnung eines Qualitätssicherungssystems mit Sensor K, Manipulator M, welcher auf einer Schiene S verfahrbar ist, einem Testobjekt in Form einer Testfläche 3 sowie mit einem darauf aufgebrachten Testauftrag 16. Im Qualitätssicherungssystem, von welchem hier ein Bildverarbeitungssystem B mit mindestens einer daran angeschlossenen Kamera K ein Teil ist, ist als digitale Datei das Sollbild eines Auftrags, Zielauftrag, auf ein nicht dargestelltes Zielobjekt hinterlegt. Gemäß diesem Sollbild fertigt der Manipulator M, welcher zum Beispiel mit dem Qualitätssicherungssystem verbunden ist, aber auch die Sollbilddaten autonom gespeichert haben kann, einen Testauftrag 16 auf einer Folie F an, welche ihrerseits auf die Testfläche 3 aufgespannt ist. Dieser Testauftrag 16 wird nun vom Sensor K aufgenommen, die Daten digitalisiert und mit den hinterlegten Daten des Sollbildes verglichen, zum Beispiel gemäß Templatematching-Verfahren.

Die Figuren 4 und 5 zeigen zwei weitere Testobjekte 4, 5 mit schematisch dargestellten unterschiedlichen Testaufträgen 17, 18, 19, 20, und 21.

Der Manipulator M kann z.B. ein Roboter sein. Als Sensor wird vorzugsweise eine Kamera benutzt; selbstverständlich können auch mehrere Sensoren bzw. Kameras verwendet werden. Das Qualitätssicherungsystem oder der Sensor bzw. die Sensoren können von dem Manipulator getragen werden, so daß sich der Sensor bzw. die Sensoren während des Aufbringens des Testauftrags zwangsläufig im Bereich des Testobjekts befinden. Der Sensor liefert vorzugsweise Signale, welche den Zustand des Testauftrags abbilden. Die Toleranzen für die Abweichung zwischen Istbild und Sollbild werden z.B. manuell eingegeben. Eine andere Möglichkeit besteht darin, das Istbild aufzunehmen und es 1:1 mit dem Sollbild z.B. mittels Template-Matching oder mittels Korrelationsverfahren zu vergleichen.

### Gewerbliche Anwendbarkeit:

Des erfindungsgemäße Verfahren ist zum Beispiel in der Automatisierungstechnik zur Qualitätssicherung von Aufträgen, wie Klebenähten, Kleberaupen, Schweißnähten, Beschichtungen sowie beim Aufbringen von Materialschichten durch Sprühen oder Spritzen gewerblich anwendbar. Das Qualitätssicherungssystem kann zum Beispiel mittels Röntgentechnik oder taktiler Verfahren oder Ultraschallverfahren oder optischer Verfahren, vorzugsweise mittels Bildverarbeitungssystem mit wenigstens einer Kamera, arbeiten. Der Gegenstand der Erfindung kann des weiteren auch in der Druckindustrie und in der Reprotechnik eingesetzt werden.

### Liste der Bezugszeichen:

- 1,2,4,5: Testobjekte, wie Testflächen
- 3: Trägerfläche
- 11,12,13,14,15,16,17,18,19,20,21: Testaufträge
- B: Bildverarbeitungssystem
- F: Folie als Testobjekt
- K: Kamera
- M: Manipulator
- S: Schiene

## Patentansprüche

1. Verfahren zur Qualitätssicherung eines als Zielauftrag auf ein Zielobjekt aufzubringenden Auftrags eines Mediums, wie Klebe-, Sprüh-, Schweiß- oder Spritzauftrag, unter Verwendung eines Manipulators (M) zum Aufbringen des Auftrags sowie einer externen Prüfstation, welche ein Qualitätssicherungssystem mit mindestens einem daran angeschlossenen Sensor, wie Bildverarbeitungssystem (B) mit mindestens einer daran angeschlossenen Kamera (K), sowie ein im Erfassungsbereich desselben angeordnetes, von dem Zielobjekt beabstandetes beschichtbares, wie beklebbar, besprühbar oder bespritzbar, Testobjekt (1,2,4,5,F) umfaßt, **gekennzeichnet durch** folgende Schritte:
a) die wesentlichen geforderten Solleigenschaften, nämlich die räumliche Form- und/oder die Farbgebung des beabsichtigten, nachfolgend auf das Zielobjekt aufzubringenden Zielauftrags werden als vorgegebene Soll-Daten in dem Qualitätssicherungssystem gespeichert,
b) der Manipulator (M) wird so gesteuert, daß er vor Aufbringen des Zielauftrags auf das Zielobjekt zunächst auf das Testobjekt (1,2,4,5,F) einen Testauftrag (11,12,13,14,15,16,17,18,19,20,21), wie in Form eines Klebe- oder Sprüh- oder Spritzauftrags, aufbringt,
c) nach Aufbringen des Testauftrags (11,12,13,14,15,16,17,18,19,20,21) auf das Testobjekt (1,2,4,5,F) wird das Qualitätssicherungssystem dazu veranlaßt, ein Abbild des Testauftrags (11,12,13,14,15,16,17,18,19,20,21) zu erfassen und dieses entweder in Form von Ist-Daten zu speichern oder aus diesem die wesentlichen Ist-Eigenschaften des Testauftrags (11,12,13,14,15, 16,17,18,19,20, 21), nämlich dessen Form- und/oder Farbgebung, abzuleiten und in Form von Ist-Daten zu speichern, und die Ist-Daten zum Zweck der Kontrolle des Testauftrags (11,12,13,14,15, 16,17,18,19,20,21) mit den Soll-Daten zu vergleichen,
d) das Ergebnis des Vergleichs wird zurückgemeldet, wobei bei Erkennen einer eine bestimmte Toleranzschwelle überschreitenden Abweichung der Ist-Daten von den Soll-Daten ein Schaltsignal ausgelöst und/ oder die Aufbringung des Zielauftrages auf das Zielobjekt verhindert oder angehalten wird, und
e) der Manipulator (M) wird bei Ausbleiben des Schaltsignals zum Aufbringen des Zielauftrages auf das Zielobjekt so gesteuert, daß Zielauftrag und Testauftrag (11,12,13,14,15,16,17,18,19,20,21) in ihren wesentlichen Eigenschaften, wie Form- und/oder Farbgebung und / oder Konsistenz, im Wesentlichen übereinstimmen,
wobei
- entweder ein die wesentlichen Soll-Eigenschaften aufweisender Referenz-Auftrag des Klebers oder Mediums auf eine von dem Testobjekt (1,2,4,5,F) beabstandete Referenzfläche aufgebracht, mittels des Sensors des Qualitätssicherungssystems, wie Kamera (K) des Bildverarbeitungssystems (B), ein Abbild des Referenz-Auftrages erfaßt und dieses in Form von digitalen Daten in das Qualitätssicherungssystem eingelesen wird, und diese digitalen Daten als Soll-Daten herangezogen werden,
- oder mittels Software, insbesondere Grafikprogramm, eine graphische Simulation einer Abbildung eines die wesentlichen Solleigenschaften aufweisenden Auftrags des Mediums, zum Beispiel Kleber, auf eine Fläche erstellt wird, und die der Simulation der Abbildung zu Grunde liegenden Daten als Soll-Daten verwendet werden.

2. Verfahren nach Anspruch 1, **dadurch gekennzeichnet,**
**daß** der Schritt a) nach dem Schritt b) oder nach dem Schritt c) oder nach dem Schritt d) ausgeführt wird.

3. Verfahren nach Anspruch 1, **dadurch gekennzeichnet,**
**daß** der Vergleich zwischen den Soll-Daten und den Ist-Daten mittels eines Mustervergleichs, wie Templatematching, innerhalb des Qualitätssicherungssystems, wie mittels Bildverarbeitung durch das Bildverarbeitungssystem (B), durchgeführt wird.

4. Verfahren nach Anspruch 1, **dadurch gekennzeichnet,**
**daß** die wesentlichen Solleigenschaften durch die geforderte Formgebung, nämlich geforderte Länge, Breite, Höhe, Dicke, Krümmung und Torsion, sowie durch die geforderte Farbgebung des Zielauftrags bestimmt sind.

5. Verfahren nach einem der Ansprüche 1 bis 4, **dadurch gekennzeichnet,**
**daß** als Testobjekt (1,2,4,5) eine Platte, insbesondere Aluminiumplatte, verwendet wird.

6. Verfahren nach einem der Ansprüche 1 bis 5, **dadurch gekennzeichnet,**
**daß** nach Ende des Schrittes d) das mit dem Auftrag beklebte, besprühte oder bespritzte Testobjekt (1,2,4,5,F) weggefahren und aus einem Magazin von Flächen ein neues Objekt entnommen und im Erfassungsbereich des Sensors des Qualitätssicherungssystems, wie Kamera (K) des Bildverarbeitungssystems (B), sowie innerhalb der Reichweite des Manipulators (M) angeordnet wird, und die Schritte b) bis d) unter Verwendung des neuen Objekts als Testobjekt erneut ausgeführt werden.

7. Verfahren nach einem der Ansprüche 1 bis 6, **dadurch gekennzeichnet,**
**daß** das Testobjekt (1,2,4,5,F) beliebig im Erfassungsbereich des Sensors des Qualitätssicherungssystems, wie Kamera (K) des Bildverarbeitungssystems (B), sowie innerhalb der Reichweite des Manipulators (M) angeordnet wird.

8. Verfahren nach einem der Ansprüche 1 bis 7, **dadurch gekennzeichnet,**
**daß** die Schritte b) bis d) nach Beendigung jedes Zielauftrags erneut durchgeführt werden.

9. Verfahren nach einem der Ansprüche 1 bis 8, **dadurch gekennzeichnet,**
**daß** die Schritte b) bis d) dann erneut durchgeführt werden, wenn eine vorgegebene Anzahl von Zielaufträgen erfolgt ist.

10. Verfahren nach einem der Ansprüche 1 bis 9, **dadurch gekennzeichnet,**
**daß** das Testobjekt (1,2,4,5,F) und das Zielobjekt hinsichtlich ihrer Form, ihres Materials und ihrer Oberflächenbeschaffenheit gleichartig sind.

11. Verfahren nach Anspruch 10, **dadurch gekennzeichnet,**
**daß** die Relativorientierung bzw. die Relativposition des Testobjekts (1,2,4,5,F) gegenüber dem Manipulator (M) während des Aufbringens des Testauftrags (11,12,13,14,15,16,17,18,19,20,21) mit der Relativorientierung bzw. der Relativposition des Zielobjekts gegenüber dem Manipulator (M) während des Aufbringens des Zielauftrags identisch gewählt wird.

12. Verfahren nach einem der Ansprüche 8 bis 11, **dadurch gekennzeichnet, daß**
f) vor Beginn des Schrittes b) eine Folie (F) als Testobjekt (F) auf eine Trägerfläche (3) aufgebracht wird,
g) die Folie (F) nach Ende des Schrittes d) von der Trägerfläche (3) entfernt wird, und zwar vorzugsweise automatisch,
h) mindestens ein Zielauftrag aufgebracht wird,
i) eine neue Folie als Testobjekt auf die Trägerfläche (3) aufgebracht wird, und zwar vorzugsweise automatisch,
j) die Schritte b) bis d) erneut, vorzugsweise automatisch, ausgeführt werden.

13. Verfahren nach Anspruch 12, **dadurch gekennzeichnet,**
**daß** die Schritte g) bis j) mehrmals zyklisch nacheinander ausgeführt werden.

14. Verfahren nach einem der vorherigen Ansprüche, **dadurch gekennzeichnet,**
**dass** der Testauftrag (16) auf eine Folie (F), insbesondere Kunststoffolie, aufgebracht wird, die ihrerseits an einer Trägerfläche angeordnet ist, wobei die Folie (F) vor Aufbringen des Testauftrags (16) von einer Abwickelrolle abgerollt und nach Aufbringen des Testauftrags (16) und erfolgter Prüfung desselben auf eine Aufwickelrolle aufgerollt wird, wobei diese Vorgänge vorzugsweise automatisch durch einen Roboter erfolgen.

15. Verfahren nach Anspruch 1, **dadurch gekennzeichnet,**
**dass** der Sensor des Qualitätssicherungssystems positionierbar ist, wobei bei der Verwendung eines Bildverarbeitungssystems als Qualitätssicherungssystem die wenigstens eine verwendete Kamera (K) eine Schwenkneigekopfkamera ist, welche einen schwenkbaren, frei positionierbaren Sensorkopf aufweist, dessen Position parametrierbar ist.

## Claims

1. A method for the quality assurance of a target coating of a medium such as a glued, sprayed, welded or atomized coating to be applied as a target coating onto a target object, making use of a manipulator (M) to apply the coating, as well as of an external testing station comprising a quality assurance system having at least one sensor connected to it, such as an image processing system (B) with at least one camera (K) connected to it, as well as a test object (1,2,4,5,F) that is arranged in the detection area thereof at a distance from the target object and that can be coated by a gluing, spraying or atomizing technique, **characterized by** the following steps:
a) the required essential setpoint properties, namely, the three-dimensional shape and/or the coloration of the intended target coating to be subsequently applied to the target object are stored as prescribed setpoint data in the quality assurance system,
b) the manipulator (M) is controlled in such a way that, before the target coating is applied onto the test object (1, 2, 4, 5, F), it applies a test coating (11, 12, 13, 14, 15, 16, 17, 18, 19, 20, 21), for example, in the form of a glued, sprayed or atomized coating,
c) after the test coating (11, 12, 13, 14, 15, 16, 17, 18, 19, 20, 21) has been applied onto the test object (1, 2, 4, 5, F), the quality assurance system is made to acquire an image of the test coating (11, 12, 13, 14, 15, 16, 17, 18, 19, 20, 21) and to store it either in the form of actual data or, from this, to derive the essential actual properties of the test coating (11, 12, 13, 14, 15, 16, 17, 18, 19, 20, 21), namely, its shape and/or coloration, and to store this in the form of actual data, and to compare the actual data with the setpoint data for purposes of checking the test coating (11, 12, 13, 14, 15, 16, 17, 18, 19, 20, 21),
d) the result of the comparison is fed back, whereby, when a deviation of the actual data from the setpoint data exceeding a certain tolerance threshold is detected, a switching signal is triggered and/or the application of the target coating onto the target object is prevented or stopped, and
e) if the switching signal for the application of the target coating onto the target object is absent, the manipulator (M) is controlled in such a way that the essential properties of the target coating and of the test coating (11, 12, 13, 14, 15, 16, 17, 18, 19, 20, 21) such as shape and/or the coloration and/or consistency essentially match,
whereby
• either a reference coating of the adhesive or medium having the essential setpoint properties is applied onto a reference surface at a distance from the test object (1, 2, 4, 5, F), then an image of the reference coating is acquired by means of the sensor of the quality assurance system such as the camera (K) of the image processing system (B), and this image is read in into the quality assurance system in the form of digital data, and this digital data is used as setpoint data,
• or else, by means of software - especially a graphics program - a graphic simulation of an image of a coating of the medium, for example, an adhesive, having the essential setpoint properties is created on a surface, and the data upon which the simulation of the image is based is used as setpoint data.

2. The method according to Claim 1, **characterized in that** step a) is carried out after step b) or after step c) or after step d).

3. The method according to Claim 1, **characterized in that**
the comparison between the setpoint data and the actual data is carried out by means of a pattern comparison such as, for example, template matching, within the quality assurance system, such as by means of image processing by the image processing system (B).

4. The method according to Claim 1, **characterized in that**
the essential setpoint properties are determined by the required shape, namely, the required length, width, height, thickness, curvature and torsion, as well as by the required coloration of the target coating.

5. The method according to any of Claims 1 to 4, **characterized in that** a plate, especially an aluminum plate, is used as the test object (1, 2, 4,5).

6. The method according to any of Claims 1 to 5, **characterized in that**, after the end of step d), the test object (1,2,4,5,F) that has been glued, sprayed or atomized with the coating is moved away and a new object is taken from a cartridge containing surfaces and is arranged within the detection range of the sensor of the quality assurance system such as the camera (K) of the image processing system (B), as well as within the range of the manipulator (M), and steps b) through d) are carried out once again using the new object as the test object.

7. The method according to any of Claims 1 to 6, **characterized in that** the test object (1, 2, 4, 5, F) is arranged in any desired manner in the detection range of the sensor of the quality assurance system such as the camera (K) of the image processing system (B), as well as within the range of the manipulator (M).

8. The method according to any of Claims 1 to 7, **characterized in that** steps b) through d) are carried out once again after each target coating has been applied.

9. The method according to any of Claims 1 to 8, **characterized in that** steps b) through d) are carried out once again when a prescribed number of target coatings have been executed.

10. The method according to any of Claims 1 to 9, **characterized in that** the test object (1, 2, 4, 5, F) and the target object are identical in terms of their shape, their material and their surface characteristics.

11. The method according to Claim 10, **characterized in that**, the relative orientation or the relative position of the test object (1, 2, 4, 5, F) with respect to the manipulator (M) during the application of the test coating (11, 12, 13, 14, 15, 16, 17, 18, 18, 20, 21) is selected to be identical to the relative orientation or the relative position of the target object with respect to the manipulator (M) during the application of the test coating.

12. The method according to any of Claims 8 to 11, **characterized in that**
f) before the start of step b), a film (F) is applied as the test object (F) onto a carrier surface (3),
g) the film (F) is removed from the carrier surface (3) after the end of step d), preferably automatically,
h) at least one target coating is applied,
i) a new film is applied as the test object onto the carrier surface (3), preferably automatically,
j) steps b) to d) are carried out once again, preferably automatically.

13. The method according to Claim 12, **characterized in that**
steps g) through j) are carried out cyclically one after the other several times.

14. The method according to any of the preceding claims, **characterized in that**
the test coating (16) is applied onto a film (F), especially a plastic film which, in turn, is arranged on a carrier surface, whereby the film (F) is unwound from an unwinding roller before the application of the test coating (16) and, after said test coating (16) has been applied and tested, it is wound up onto a winding roller, whereby these procedures are preferably performed automatically by a robot.

15. The method according to Claim 1, **characterized in that**
the sensor of the quality assurance system can be positioned, whereby, when an image processing system is used as the quality assurance system, the at least one camera (K) employed is a pan-tilt head camera that has a tilting, freely positionable sensor head, whose position can be parameterized.

## Revendications

1. Procédé destiné à l'assurance qualité de la couche d'un milieu devant être appliquée, à titre d'application cible, sur un objet cible par collage, pulvérisation, soudage ou par projection, en ayant recours à un manipulateur (M) pour l'application de la couche, ainsi qu'à un poste de contrôle externe, lequel comprend un système d'assurance qualité avec au moins un capteur qui lui est connecté, tel qu'un système de traitement de l'image (B) comportant au moins une caméra (K) qui lui est connectée, ainsi qu'à un objet d'essai (1,2,4,5,F) enductible par collage, par pulvérisation ou par projection, à l'écart de l'objet cible et disposé dans la zone de saisie de celui-ci, **caractérisé par** les étapes suivantes :
a) les principales caractéristiques de consigne requises, à savoir la conformation dans l'espace et/ou la teinte du dépôt cible prévu devant être par la suite apporté sur l'objet cible, sont mises en mémoire dans le système d'assurance qualité à titre de données de consigne prédéfinies,
b) le manipulateur (M) est piloté de sorte que, avant l'apport de la couche cible sur l'objet cible, il apporte d'abord sur l'objet d'essai (1,2,4,5,F) une couche d'essai (11,12,13,14,15,16,17,18,19,20,21) telle que sous la forme d'une application par collage, ou par pulvérisation, ou par projection,
c) après l'application de la couche d'essai (11,12,13,14,15,16,17,18,19,20, 21) sur l'objet d'essai, (1,2,4,5,F), le système d'assurance qualité est amené à saisir une image de la couche d'essai (11,12,13,14,15,16, 17,18,19,20,21) et, ou bien à mémoriser ladite image sous forme de données réelles, ou bien à en déduire les principales caractéristiques réelles de la couche d'essai (11,12,13,14,15,16,17,18,19,20,21), à savoir sa conformation et/ou sa teinte et à les mémoriser sous forme de données réelles, et à comparer les données réelles avec les données de consigne à des fins de contrôle de la couche d'essai (11,12,13,14,15,16, 17,18,19, 20, 21),
d) il y a retour d'information du résultat de la comparaison et en cas de reconnaissance d'un écart entre les données réelles et les données de consigne dépassant un seuil de tolérance défini, un signal de commutation est déclenché et/ou l'application de la couche cible sur l'objet cible est empêchée ou arrêtée, et
e) en cas d'absence de signal de commutation, le manipulateur (M) est piloté pour l'application de la couche cible sur l'objet cible de sorte que l'application cible et la couche d'essai (11,12,13,14,15,16,17,18,19,20, 21) concordent pour l'essentiel dans leurs principales caractéristiques, telles que la conformation et/ou la teinte et/ou la consistance,
dans lequel,
- ou bien une couche de référence de la colle ou du milieu présentant les principales caractéristiques de consigne est appliquée sur une surface de référence à l'écart de l'objet d'essai (1,2,4,5,F), une image de la couche de référence est saisie au moyen du capteur du système d'assurance qualité, tel que la caméra (K) du système de traitement de l'image (B) et ladite image est entrée dans le système d'assurance qualité sous forme de données numériques qui sont utilisées en tant que données de consigne,
- ou bien une simulation graphique d'une image d'une couche du milieu, par exemple de la colle, présentant les principales caractéristiques sur une surface est établie au moyen d'un logiciel, en particulier d'un programme graphique, et les données qui sont à la base de la simulation de l'image sont utilisées en tant que données de consigne.

2. Procédé selon la revendication 1, **caractérisé en ce que**
l'étape a) est exécutée après l'étape b) ou après l'étape c) ou après l'étape d).

3. Procédé selon la revendication 1, **caractérisé en ce que**
la comparaison entre les données de consigne et les données réelles est effectuée au moyen d'un méthode d'appariement, telle que le « Template Matching », au sein du système d'assurance qualité, comme au moyen du traitement de l'image par le système de traitement de l'image (B)

4. Procédé selon la revendication 1, **caractérisé en ce que**
les principales caractéristiques de consigne sont déterminées par la conformation requise, à savoir la longueur, la largeur, la hauteur, l'épaisseur, la courbure et la torsion, ainsi que par la teinte requises de l'application cible.

5. Procédé selon l'une des revendications 1 à 4, **caractérisé en ce que**
l'on utilise comme objet d'essai (1,2,4,5) une plaque, en particulier une plaque d'aluminium.

6. Procédé selon l'une des revendications 1 à 5, **caractérisé en ce que**
à la fin de l'étape d) l'objet d'essai (1,2,4,5,F) ayant reçu une application par collage, pulvérisation ou projection est emmené et un nouvel objet est prélevé d'un magasin de substrats et est disposé dans la zone de saisie du capteur du système d'assurance qualité, tel que la caméra (K) du systéme de traitement de l'image (B), ainsi qu'à la portée du manipulateur (M), et les étapes b) à d) sont à nouveau effectuées en utilisant le nouvel objet comme objet d'essai.

7. Procédé selon l'une des revendications 1 à 6, **caractérisé en ce que**
l'objet d'essai (1,2,4,5,F) est disposé d'une façon quelconque dans la zone de saisie du capteur du système d'assurance qualité tel que la caméra (K) du système de traitement de l'image (B), ainsi qu'à la portée du manipulateur (M).

8. Procédé selon l'une des revendications 1 à 7, **caractérisé en ce que**
les étapes b) à d) sont à nouveau effectuées à la fin de chaque application cible.

9. Procédé selon l'une des revendications 1 à 8, **caractérisé en ce que**
les étapes b) à d) sont à nouveau effectuées lorsqu'il s'est produit un nombre défini d'applications cible.

10. Procédé selon l'une des revendications 1 à 9, **caractérisé en ce que**
l'objet d'essai (1,2,4,5,F) et l'objet cible sont de même nature quant à leur forme, leur matériau et leur qualité de surface.

11. Procédé selon la revendication 10, **caractérisé en ce que**
l'orientation relative ou la position relative de l'objet d'essai (1,2,4,5,F) par rapport au manipulateur (M) pendant l'application de la couche d'essai (11,12,13,14,15,16,17,18,19,20,21) doit être choisie identique à l'orientation relative ou la position relative de l'objet cible par rapport au manipulateur (M) pendant l'application de la couche cible.

12. Procédé selon l'une des revendications 8 à 11, **caractérisé en ce que**
f) avant le début de l'étape b) un film (F) est appliqué comme objet d'essai (F) sur une surface-support (3),
g) le film (F) est retiré de la surface-support (3) à la fin de l'étape (d), et ce, de préférence automatiquement,
h) l'on applique au moins une couche cible,
i) un nouveau film est appliqué sur la surface-support (3) en tant qu'objet d'essai, et ce, de préférence automatiquement,
j) les étapes b) à d) sont effectuées de nouveau, de préférence automatiquement.

13. Procédé selon la revendication 12, **caractérisé en ce que** les étapes g) à j) sont exécutées plusieurs fois successivement par cycle.

14. Procédé selon l'une quelconque des revendications précédentes, **caractérisé en ce que**
la couche d'essai (16) est appliquée sur un film (F), en particulier un film en matière synthétique, lequel est disposé pour sa part sur une surface-support, le film (F) étant déroulé d'un rouleau dérouleur avant l'application de la couche d'essai (16) et étant rembobiné sur un rouleau bobineur une fois que le contrôle de l'application d'essai est terminé, ces processus étant effectués de préférence automatiquement par robot.

15. Procédé selon la revendication 1, **caractérisé en ce que**
le capteur du système d'assurance qualité est positionnable, cela dit, lorsque le système d'assurance qualité utilisé est un système de traitement de l'image, la caméra qui est au moins la seule utilisée, est une caméra à tête pivotante et inclinable qui possède une tête détectrice pivotante librement positionnable dont la position est paramétrable.
